# EUROPEAN PATENT SPECIFICATION

(11) **EP 1 949 693 B1**
(45) Date of publication and mention of the grant of the patent: **18.04.2012**
(21) Application number: 06799178.6
(22) Date of filing: 12.10.2006
(51) Int. Cl.: G10L 19/00, G10L 19/14

(54) **METHOD AND APPARATUS FOR PROCESSING/TRANSMITTING BIT-STREAM, AND METHOD AND APPARATUS FOR RECEIVING/PROCESSING BIT-STREAM**
VERFAHREN UND VORRICHTUNG ZUM VERARBEITEN/SENDEN EINES BITSTROMS UND VERFAHREN UND VORRICHTUNG ZUM EMPFANGEN/VERARBEITEN EINES BITSTROMS
PROCEDE ET APPAREIL DE TRAITEMENT/EMISSION DE FLUX DE BITS ET PROCEDE ET APPAREIL DE RECEPTION/TRAITEMENT DE FLUX DE BITS

(30) Priority: 12.10.2005 US 725317 P; 14.10.2005 US 726159 P; 30.05.2006 KR 20060049081; 30.05.2006 KR 20060049082; 19.07.2006 KR 20060067705; 28.09.2006 KR 20060095040
(43) Date of publication of application: 30.07.2008
(73) Proprietor: Samsung Electronics Co., Ltd., Seoul 442-742 (KR)
(72) Inventor: KIM, Jung-Hoe, Gyeonggi-do 449-901 (KR); OH, Eun-Mi, Gyeonggi-do 449-901 (KR)
(74) Representative: Grünecker, Kinkeldey, Stockmair & Schwanhäusser
(86) International application number: PCT/KR2006/004098
(87) International publication number: WO 2007/043808

(56) References cited:
- WO-A-2004/008806
- WO-A1-2005/112005
- WO-A2-03/104935
- KR-A- 20050 051 046
- US-A1- 2004 181 395
- FEITEN B ET AL: "Audio Adaptation According to Usage Environment and Perceptual Quality Metrics" IEEE TRANSACTIONS ON MULTIMEDIA, IEEE SERVICE CENTER, PISCATAWAY, NJ, US LNKD- DOI:10.1109/TMM.2005.846793, vol. 7, no. 3, 1 June 2005 (2005-06-01), pages 446-453, XP011131803 ISSN: 1520-9210
- HERRE J. AND GRILL B.: 'OVERVIEW OF MPEG-4 AUDIO AND ITS APPLICATIONS IN MOBILE COMMUNICATIONS' PROCEEDINGS OF ICCT vol. 1, 2000, pages 604 - 613, XP002316587

## Description

The present invention relates to a method and apparatus for coding/decoding audio data, and more particularly, to a method and apparatus for hierarchically coding/ decoding audio data such as bit sliced arithmetic coding (BSAC).

### Background Art

There are two ways to transmit a bit sliced arithmetic coding (BSAC) payload to support the functionality of fine granular scalability (FGS). One is to drop elementary streams for a BSAC access unit. In this case, the access unit is defined as an independently accessible part in an elementary stream. The access unit is the smallest data unit that can contain timing information. One could see in WO 03/104935 a solution for assigning a priority to each access unit to decide which could be dropped.

### Disclosure of Invention

### Technical Problem

When a bit-stream is transmitted to a decoder by hierarchically coding audio data in a coder using the aforementioned transmission methods, a problem conventionally lies in that there is no solution to effectively transmit the hierarchically coded audio data along with extension data that can form audio data such as data for extending a channel of audio data to a multi-channel, data for extending a bandwidth of audio data, and data for generating a cyclic redundancy code (CRC) for checking a transmission error of audio data.

### Technical Solution

The present invention provides an apparatus and method for enhancing audio data scalability and for providing backward compatibility so as to support a conventional hierarchical coding method.

The present invention also provides an apparatus and method for providing a solution in which importance of extension data is taken into account in addition to importance of an audio data band for scalable transmission.

The present invention also provides a computer-readable medium having embodied thereon a computer program for executing the aforementioned methods.

However, the present invention is not limited to the above aspects, and other aspects may be present. This will be clearly understood those skilled in the art from the descriptions below.

According to an aspect of the present invention, there is provided a method as defined in claim 1 of processing/transmitting a bit-stream, the method comprising: coding audio data and one or more extension data of the audio data; interleaving payloads resulting from the coding by grouping the payloads; and dropping a group of the payloads grouped and interleaved, and transmitting the rest of groups of the payloads.

According to another aspect of the present invention as defined in claim 11, there is provided a computer-readable medium having embodied thereon a computer program for executing the method of processing/transmitting a bit-stream.

According to another aspect of the present invention as defined in claim 12, there is provided an apparatus for processing/transmitting a bit-stream, the apparatus comprising: a coder that codes audio data and one or more extension data of the audio data; a processor that interleaves payloads resulting from the coding by grouping the payloads; and a transmitter that drops a group of the payloads grouped and interleaved, and transmits the rest of groups of the payloads.

According to another aspect of the present invention as defined in claim 13, there is provided a method of receiving/processing a bit-stream, the method comprising: receiving some payloads grouped and interleaved; restoring the payloads grouped and interleaved to original form; and decoding audio data included in the restored payloads and one or more extension data of the audio data.

According to another aspect of the present invention as defined in claim 23, there is provided a computer-readable medium having embodied thereon a computer program for executing the method of receiving/processing a bit-stream.

According to another aspect of the present invention as defined in claim 24, there is provided an apparatus for receiving/processing a bit-stream, the apparatus comprising: a receiver that receives some payloads grouped and interleaved; a restorer that restores the payloads grouped and interleaved to original form; and a decoder that decodes audio data included in the restored payloads and one or more extension data of the audio data.

### Advantageous Effects

According to the present invention, payloads of audio data and extension data thereof can be grouped and interleaved according to priority so that some groups thereof are dropped, and the rest of groups are transmitted. Therefore, the extension data that is more important than a top layer of audio data in terms of reproducing original sound can be transmitted with priority.

In conclusion, the present invention provides a solution in which importance of extension data is taken into account in addition to importance of an audio data band for scalable transmission.

### Description of Drawings

The above and other features and advantages of the present invention will become more apparent by describing in detail exemplary embodiments thereof with reference to the attached drawings in which:
FIG. 1 is a block diagram of a bit-stream processing/transmitting apparatus according to an embodiment of the present invention;
FIG. 2 illustrates an example of dropping an elementary stream in a bit-stream processing/transmitting apparatus according to an embodiment of the present invention;
FIG. 3 illustrates another example of dropping an elementary stream in a bit-stream processing/transmitting apparatus according to an embodiment of the present invention;
FIG. 4 illustrates another example of dropping an elementary stream in a bit-stream processing/transmitting apparatus according to an embodiment of the present invention;
FIG. 5 is a block diagram of a bit-stream processing/transmitting apparatus according to another embodiment of the present invention;
   FIG. 6 illustrates an example of truncating a payload in a bit-stream processing/ transmitting apparatus according to an embodiment of the present invention;
FIG. 7 is a block diagram of a bit-stream receiving/processing apparatus according to an embodiment of the present invention;
FIG. 8 is a block diagram of a bit-stream receiving/processing apparatus according to another embodiment of the present invention;
FIG. 9 is a flowchart of a bit-stream processing/transmitting method according to an embodiment of the present invention;
FIG. 10 is a flowchart of a bit-stream processing/transmitting method according to another embodiment of the present invention;
FIG. 11 is a flowchart of a bit-stream receiving/processing method according to another embodiment of the present invention; and
FIG. 12 is a flowchart of a bit-stream receiving/processing method according to another embodiment of the present invention.

### Mode for Invention

Hereinafter, exemplary embodiments of the present invention will be described with reference to the accompanying drawings.

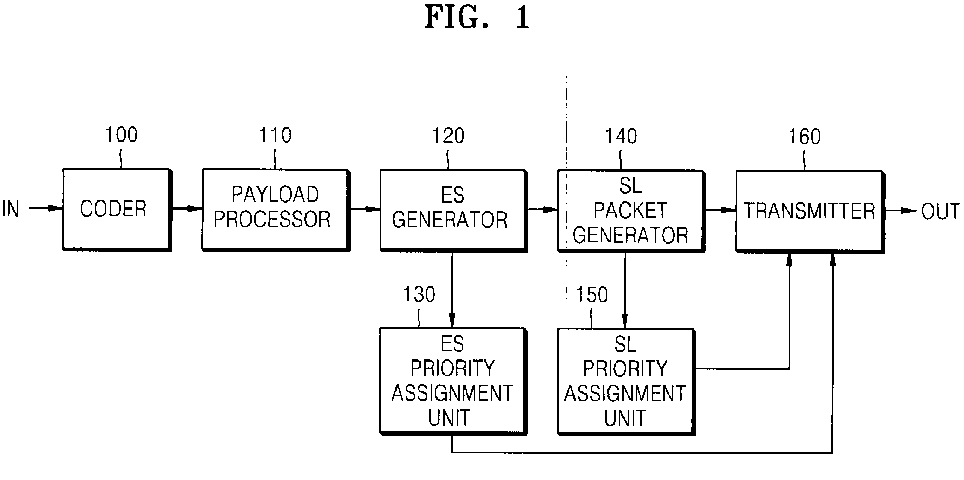

FIG. 1 is a block diagram of a bit-stream processing/transmitting apparatus according to an embodiment of the present invention. The bit-stream processing/ transmitting apparatus includes a coder 100, a payload processor 110, an elementary stream (ES) generator 120, an ES priority assignment unit 130, a sync layer (SL) packet generator 140, a SL priority assignment unit 150, and a transmitter 160.

The coder 100 hierarchically codes audio data and extension data of the audio data. In this case, the audio data may be coded by using a bit sliced arithmetic coding (BSAC) method. Examples of the extension data of the audio data include data for extending a channel of audio data to a multi-channel, data for extending a bandwidth of audio data, and data for generating a cyclic redundancy code (CRC) for checking a transmission error of audio data. In addition to the aforementioned extension data, extension data of the audio data may be meta data of the audio data or may include a fill element of the audio data. When the extension data of the audio data is coded, the coder 100 may code at least one of the aforementioned examples of the extension data of the audio data.

When an elementary stream is dropped for a method using an access unit among payload transmission methods, the payload processor 110 groups and interleaves payloads so that some of the payloads included in one sub frame resulting from the coding of the coder 100 and some of the payloads included in another sub frame belong to one group. In MPEG standard, an access unit is defined as an independently accessible part in an elementary stream, and is the smallest data unit that can contain timing information.

The ES generator 120 generates elementary streams corresponding to payload groups on a compression layer from the payloads that are grouped and interleaved by the payload processor 110. The compression layer is defined as a layer that receives a coding result of the coder 100 and thus generates elementary streams.

The ES priority assignment unit 130 assigns priority to the elementary streams generated by the ES generator 120. More specifically, the ES priority assignment unit 130 assigns priority to the respective elementary streams according to a transmission priority on a decoder side. Accordingly, the respective elementary streams generated by the ES generator 120 have a priority specified in an ES descriptor.

The SL packet generator 140 generates SL packets corresponding to payload groups on a sync layer from the elementary streams generated by the ES generator 120. The sync layer is defined as a layer that generates SL packets providing sync information between an audio data coder and an audio data decoder by adapting elementary streams.

The SL priority assignment unit 150 assigns priority to the respective SL packets generated by the SL packet generator 140. More specifically, the SL priority assignment unit 150 assigns priority to the respective SL packets according to the transmission priority on the decoder side. The priority assigned to the respective elementary streams by the ES priority assignment unit 130 and the priority assigned to the respective SL packets by the SL priority assignment unit 150 enable several elementary streams to be dropped for scalable transmission on a sync layer and a delivery layer.

The transmitter 160 drops some of the SL packets and transmits the rest of the SL packets according to the priority of the respective elementary streams assigned by the ES priority assignment unit 130 and the priority of the respective SL packets assigned by the SL priority assignment unit 150. More specifically, the transmitter 160 determines a total bit-rate for transmitting SL packets by considering a transmission environment between a coder side and a decoder side. Further, the transmitter 160 drops the SL packets in the descending order of values obtained by subtracting priority of SL packets from priority of elementary streams, and transmits the rest of SL packets.

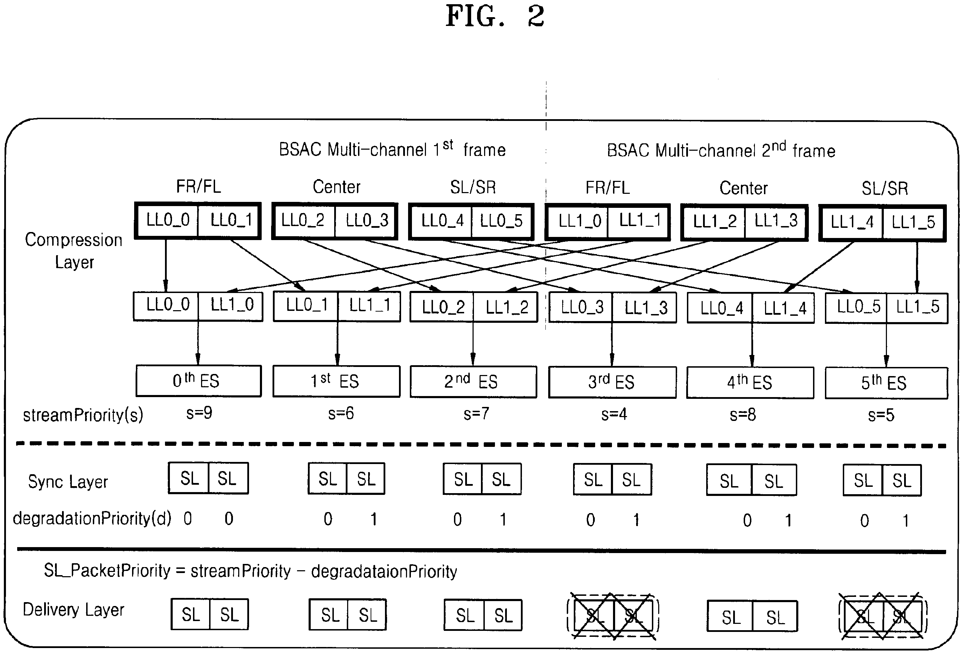

FIG. 2 illustrates an example of dropping an elementary stream in a bit-stream processing/transmitting apparatus according to an embodiment of the present invention.

The example of FIG. 2 shows scalable transmission of BSAC audio data and extension data thereof when extension data of audio data is data for extending a channel of audio data to a multi-channel. That is, this examples shows scalable transmission of BSAC payloads corresponding to 'BSAC channel extension'.

In the example illustrated in FIG. 2, the number of sub frames is set to 2, and four SL packets having low priority are dropped. However, the number of the sub frames is not limited to 2 in the present invention, and thus one or more sub frames may be used. Further, the number of dropped SL packets may occasionally change. The dropped packets correspond to a top layer of the BSAC payloads of audio data included in a center (C) channel and a surround left (SL)/ surround right (SR) channel corresponding to extension data of the audio data. Accordingly, audio data of each channel can be evenly reproduced by allowing a base layer corresponding to a low frequency band to be transmitted with priority for the audio data of each channel.

In FIG. 2, the payload processor 110 groups and interleaves BSAC payloads resulting from the coding of the coder 100 so that some of the payloads of audio data and some of the payloads of data for extending a channel of audio data belong to one group.

For example, if 5.1 channel audio data is used in the present embodiment, the payload processor 110 groups and interleaves payloads so that a base layer LL0_0 and a base layer LL1_0 belong to one group, wherein the base layer LL0_0 is included in each layer's payloads of audio data for a front left (FL) channel and a front right (FR) channel resulting from the coding of the coder 100 with respect to the FL channel and the FR channel, and the base layer LL1_0 is included in each layer's BSAC payloads of audio data for a SL channel and a SR channel resulting from the coding of the coder 100 with respect to the SL channel and the SR channel.

Further, the payload processor 110 groups and interleaves payloads so that a top layer LL0_1 and a top layer LL1_1 belong to one group, wherein the top layer LL0_1 is included in each layer's BSAC payloads of audio data for the FL channel and the FR channel resulting from the coding of the coder 100 with respect to the FL channel and the RF channel, and the top layer LL1_1 is included in each layer's BSAC payloads of audio data for a SL channel and a SR channel resulting from the coding of the coder 100 with respect to the SL channel and the SR channel.

The ES generator 120 generates a 0th elementary stream from the payloads LL0_0 and payloads LL1_0 which have been grouped and interleaved to be one group by the payload processor 110. Subsequently, the ES priority assignment unit 130 assigns a priority of 9 to the 0th elementary stream generated by the ES generator 120. The SL packet generator 140 generates two SL packets from the 0th elementary stream generated by the ES generator 120. Thereafter, the SL priority assignment unit 150 assigns a priority of 0 to the respective SL packets generated by the SL packet generator 140. Likewise, the rest of payloads illustrated in FIG. 2 are subject to the same process.

According to the total bit-rate for transmission of SL packets, the transmitter 160 drops the four SL packets in the descending order of values obtained by subtracting priority of SL packets from priority of elementary streams, and transmits the rest of SL packets.

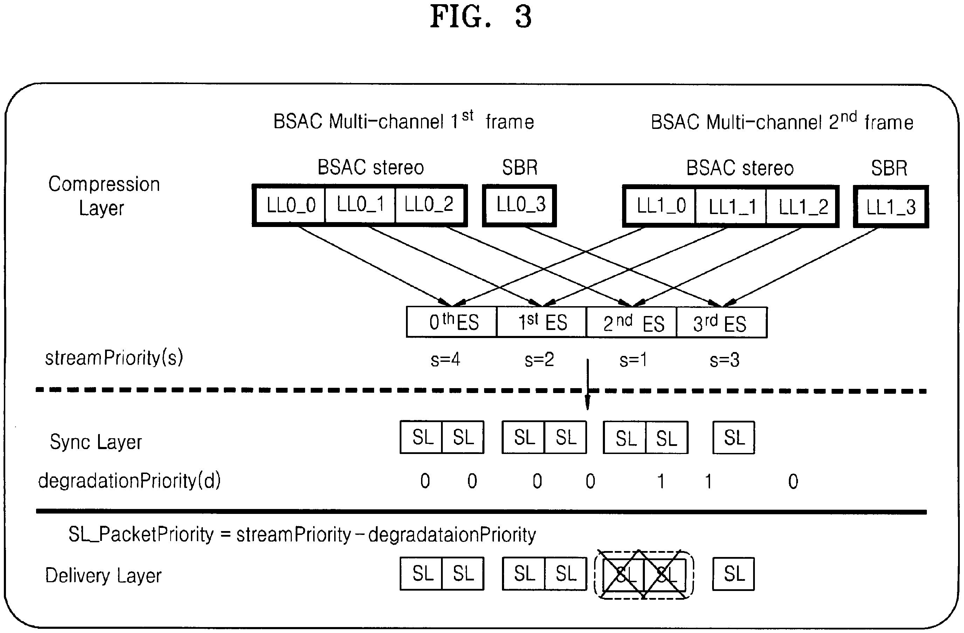

FIG. 3 illustrates another example of dropping an elementary stream in a bit-stream processing/transmitting apparatus according to an embodiment of the present invention.

The examples of FIG. 3 shows scalable transmission of audio data and extension data thereof when the extension data of stereo audio data is data for extending a bandwidth of audio data. That is, this example shows scalable transmission of BSAC payloads resulting from the coding performed by using 'BSAC spectral band replication (SBR) enhancement'.

In the example illustrated in FIG. 2, the number of sub frames is set to 2, and two SL packets having low priority are dropped. However, the number of the sub frames is not limited to 2 in the present invention, and thus one or more sub frames may be used. Further, the number of dropped SL packets may occasionally change. The dropped packets correspond to a top layer of each layer's BSAC payloads of stereo audio data included in a first sub frame and a top layer of each layer's BSAC payloads of stereo audio data included in a second sub frame. Accordingly, a total bit-rate to be transmitted can be reduced by increasing the dropped SL packets. The total bit-rate to be transmitted is reduced and results in graceful degradation in sound quality where high frequency signals in association with the top layer are reconstructed with a SBR tool.

In FIG. 3, the payload processor 110 groups and interleaves

BSAC payloads resulting from the coding of the coder 100 so that some of the BSAC payloads of audio data included in the first sub frame and some of the BSAC payloads of audio data included the second sub frame belong to one group, while a payload of data for extending a bandwidth of audio data included in the first sub frame and a payload of data for extending a bandwidth of audio data included in the second sub frame belong to one group.

For example, if stereo audio data is used in the present embodiment, the payload processor 110 groups and interleaves payloads so that the base layer LL0_0 and the base layer LL1_0 belong to one group, wherein the base layer LL0_0 is included in each layer's BSAC payloads of audio data for the FL channel and the FR channel included in the first sub frame resulting from the coding of the coder 100 with respect to the FL channel and the FR channel, while the base layer LL1-0 is included in each layer's BSAC payloads of audio data for the FL channel and the FR channel included in the second sub frame. Likewise, the rest of layers of audio data for the FL channel and the FR channel are subject to the same process.

Further, the payload processor 110 groups and interleaves payloads so that a BSAC payload LL0_3 and a BSAC payload LL1_3 belong to one group, wherein the BSAC payload LL0_3 is included in data for extending a bandwidth of audio data for the FL channel and the FR channel included in the first sub frame resulting from the coding of the coder 100, while the BSAC payload LL1_3 is included in data for extending a band width of audio data for the FL channel and the FR channel included in the second sub frame.

The ES generator 120 generates a 0th elementary stream from the payloads LL0_0 and payloads LL1_0 which have been grouped and interleaved to be one group by the payload processor 110. Likewise, the rest of layers of the audio data for the FL channel and the FR channel are subject to the same process.

Further, the ES generator 120 generates a third elementary stream from the payloads LL0_3 and payloads LL1_3 which have been grouped and interleaved to be one group by the payload processor 110. Subsequently, the ES priority assignment unit 130 assigns a priority of 9 to the 0th elementary stream generated by the ES generator 120. Likewise, the rest of layers of the audio data for the FL channel and the FR channel are subject to the same process. Further, the ES priority assignment unit 130 assigns a priority of 3 to the third elementary stream generated by the ES generator 120.

Thereafter, the SL packet generator 140 generates two SL packets from the respective elementary streams generated by the ES generator 120. Then, the SL priority assignment unit 150 assigns priority to the respective SL packets generated by the SL packet generator 140. According to the total bit-rate for transmission of SL packets, the transmitter 160 drops the two SL packets in the descending order of values obtained by subtracting priority of SL packets from priority of elementary streams, and transmits the rest of SL packets.

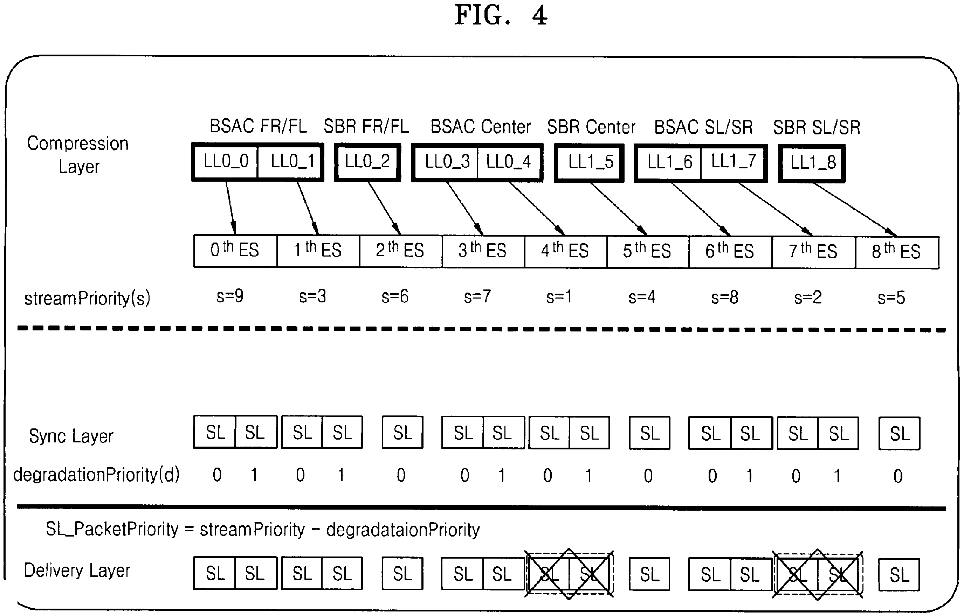

FIG. 4 illustrates another example of dropping an elementary stream in a bit-stream processing/transmitting apparatus according to an embodiment of the present invention.

The example of FIG. 4 shows scalable transmission of BSAC audio data and extension data thereof when extension data of audio data is data for extending a channel of audio data. That is, this example shows scalable transmission of 'BSAC channel extension with SBR'.

In the example illustrated in FIG. 4, four SL packets having a low priority are dropped. However, the number of the sub frames is not limited to 1 in the present invention, and thus one or more sub frames may be used. Further, the number of dropped SL packets may occasionally change.

In FIG. 4, the payload processor 110 groups and interleaves
payloads resulting from the coding of the coder 100 so that some of the BSAC payloads of audio data, some of the payloads of data for extending a channel of audio data to a multi-channel, and payloads of data for extending a bandwidth of audio data belong to one group.

The ES generator 120 generates a 0th elementary stream from the payloads LL0_0 which have been grouped and interleaved to be one group by the payload processor 110. Subsequently, the ES priority assignment unit 130 assigns a priority of 9 to the 0th elementary stream generated by the ES generator 120. The SL packet generator 140 generates two SL packets from the 0th elementary stream generated by the ES generator 120. Thereafter, the SL priority assignment unit 150 assigns priorities of 0 and 1 to the respective SL packets generated by the SL packet generator 140. Likewise, the rest of payloads illustrated in FIG. 4 are subject to the same process.

According to the total bit-rate for transmission of SL packets, the transmitter 160 drops the four SL packets in the descending order of values obtained by subtracting priority of SL packets from priority of elementary streams, and transmits the rest of SL packets.

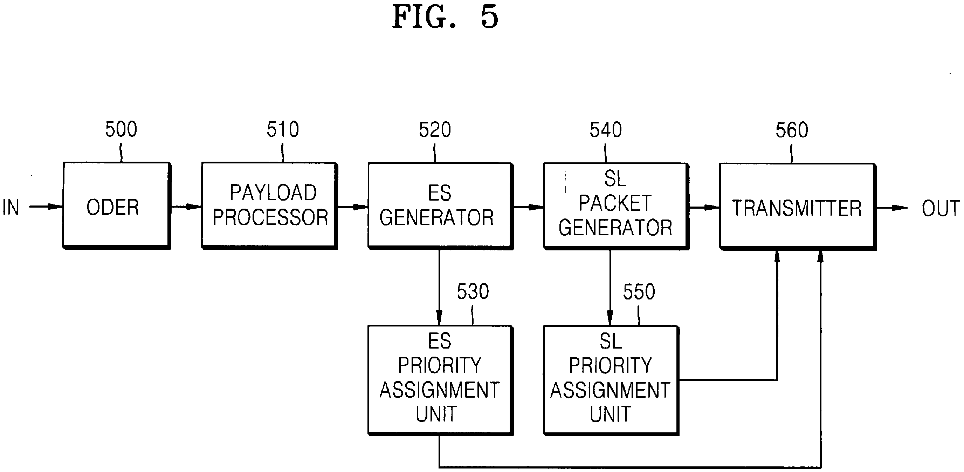

FIG. 5 is a block diagram of a bit-stream processing/transmitting apparatus according to another embodiment of the present invention. The bit-stream processing/ transmitting apparatus includes a coder 500, a payload processor 510, an ES generator 520, an ES priority assignment unit 530, a SL packet generator 540, a SL priority assignment unit 550, and a transmitter 560.

The coder 500 hierarchically codes audio data and extension data of the audio data. In this case, the audio data may be coded according to a BSAC method. Examples of the extension data of the audio data include data for extending a channel of audio data to a multi-channel, data for extending a bandwidth of audio data, and data for generating a CRC code for checking a transmission error of audio data. In addition to the aforementioned extension data, extension data of the audio data may be meta data of the audio data or may include a fill element of the audio data. When the extension data of the audio data is coded, the coder 500 may code at least one of the aforementioned examples of the extension data of the audio data.

The payload processor 510 truncates some of the payloads included in one sub frame resulting from the coding of the coder 500 along with some of the payloads included in another sub frame by considering a transmission environment between a coder side and a decoder side, for example, by considering the number of layers that can be determined according to a payload from a back-channel.

The payload processor 510 truncates some of the payloads with a 'light-weight server process'. In the present embodiment, the light-weight server process is defined as an additional process required to truncate some of the payloads, for example, to parse a bit-stream. The term 'light-weight' is used because processing and transmission of payloads are simpler when in comparison with a method of dropping an elementary stream for an access unit among transmission methods of BSAC payloads.

Further, the payload processor 510 truncates only some of the payloads of audio data, and does not truncate a payload of extension data of the audio data. Therefore, the payload processor 510 separates a payload of audio data from a payload of extension data by parsing a bit-stream, and truncates only some of the payloads which do not belong to extension data according to the result of separation.

The 'zero_code' and the 'sync_word' can be used for such separation in BASC. That is, the payload processor 510 identifies the payload of extension data by using the 'zero_code' and the 'sync_word', and truncates only some of the payloads which do not belong to the payload of extension data. The payload processor 510 concatenates the 'zero_code' and the 'sync_word' at the end of the truncated payload so that an access unit can be extracted from the transmitted elementary stream (ES) when an audio data decoder checks the 'zero_code' and the 'sync_word'. If there is no payload of extension data, the process is rather simple since the aforementioned separation is not needed.

Further, the payload processor 510 determines a target bit-rate by considering a transmission environment between the coder side and the decoder side, calculates the number of target layers according to the target bit-rate, and truncates some of the payloads depending on the number of target layers.

The ES generator 520 generates one elementary stream corresponding to payload groups on the compression layer from the payloads truncated by the payload processor 510, and also generates another elementary stream from the payload of extension data. The ES priority assignment unit 530 assignes priority to the elementary streams generated by the ES generateor 520. Subsequently, the SL packet generator 540 generates SL packets corresponding to payload groups on the sync layer from elementary streams generated by the ES generator 520. The SL priority assignment unit 550 assignes priority to the respective SL packets generated by the SL packet generator 540. The transmitter 560 transmits the SL packets generated by the SL packet generator 540. As described above, the ES generator 520, the SL packet generator 540, and the transmitter 560 are not subject to a special process for scalable transmission according to the present embodiment.

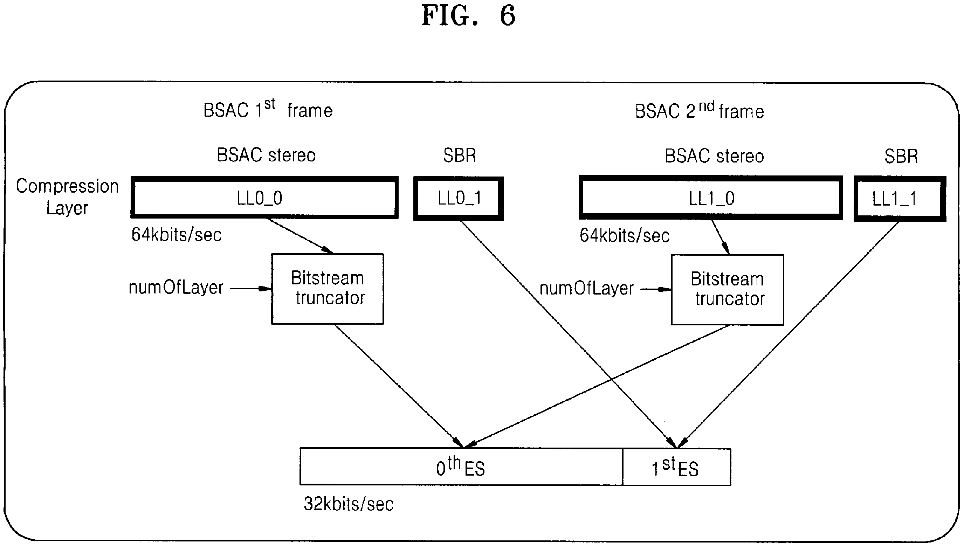

FIG. 6 illustrates an example of truncating a payload in a bit-stream processing/ transmitting apparatus according to an embodiment of the present invention.

The example of FIG. 6 shows scalable transmission of audio data and extension data thereof when extension data of stereo audio data is data for extending a bandwidth of audio data. That is, this example shows scalable transmission of a payload resulting from the coding performed by using 'BSAC SBR enhancement'.

Referring to FIG. 6, the number of sub frames is set to 2. In this case, the payload processor 510 truncates a part of each layer's payloads LL0_0 of stereo audio data included in the first sub frame and a part of each layer's payloads LL1_0 of stereo audio data included in the second sub frame. The ES generator 520 generates a 0th elementary stream from the payloads LL0_0 and LL1-0 truncated by the payload processor 510, and generates a first elementary stream from the data LL0_1 and LL1_1 for extending a bandwidth of audio data.

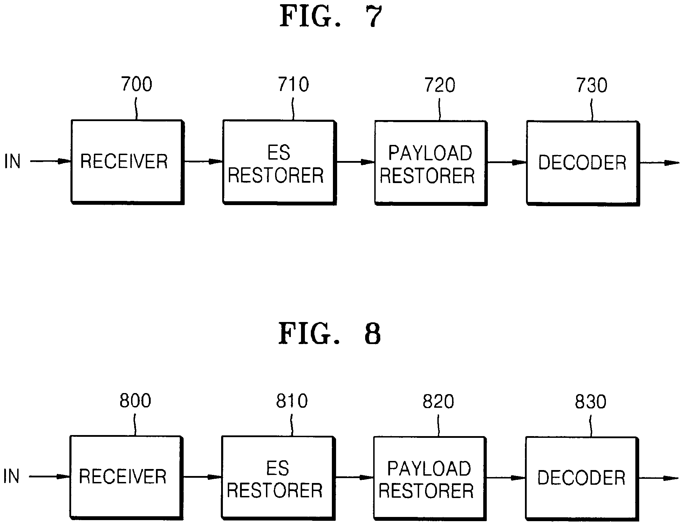

FIG. 7 is a block diagram of a bit-stream receiving/processing apparatus according to an embodiment of the present invention. The bit-stream receiving/processing apparatus includes a receiver 700, an ES restorer 710, a payload restorer 720, and a decoder 730. According to the configuration illustrated in FIG. 7, a method of dropping an elementary stream can be implemented.

The receiver 700 receives a bit-stream in a specific packet format through an input terminal IN, and thus receives SL packets including some of the payloads grouped and interleaved by the bit-stream processing/transmitting apparatus of FIG. 1. According to the present embodiment, the receiver 700 receives some of the payloads included in one sub frame and some of the payloads included in another sub frame as one group.

In the exemplary case illustrated in FIG. 2, the receiver 700 receives a base layer on each layer's BSAC payloads of audio data and a base layer of payloads of each layer of data for extending a channel of this audio data as one group. Further, the receiver 700 receives a top layer on each layer's payloads of audio data and a top layer on each layer's payloads of data for extending a channel of this audio data.

In the exemplary case illustrated in FIG. 3, the receiver 700 receives some BSAC payloads of audio data included in one of sub frame and some BSAC payloads of audio data included in another sub frame as one group. Further, the receiver 700 receives a payload of data for extending a bandwidth of audio data included in one sub frame and a payload of data for extending a bandwidth of audio data included in another sub frame as one group.

The ES restorer 710 parses the SL packets received by the receiver 700 on the SL layer, and thus restores elementary streams including some of the payloads grouped and interleaved by the bit-stream processing/transmitting apparatus of FIG. 1. The SL layer is defined as a layer for performing operations required to synchronize an audio data coder and an audio data decoder, for example, an operation of extracting synchronization information between the audio data coder and the audio data decoder from SL packets.

The payload restorer 720 restores a payload to the original form by parsing the elementary streams restored by the ES restorer 710. That is, the payload restorer 720 restores the payloads to the original form by using the elementary streams including some of the payloads grouped and interleaved by the bit-stream processing/ transmitting apparatus of FIG. 1. The compression layer is defined as a layer for performing operations required to decode payloads from elementary streams.

In particular, the payload restorer 720 obtains information on payloads in terms of the number of layers, the length, and the order by using header information on payloads included in the elementary streams restored by the ES restorer 710, wherein the header information includes information on payloads grouped and interleaved by the bit-stream processing/transmitting apparatus of FIG. 1. Thereafter, by using the obtained information, the payload restorer 720 de-interleaves the payloads received as one group as described above so as to restore one sub frames, and then restores another sub frame.

In the exemplary case illustrated in FIG. 2, the payload restorer 720 restores each layer's BSAC payloads of audio data by de-interleaving the payloads received as one group as described above, and also restores each layer's BSAC payloads of data for extending a channel of audio data.

In the exemplary case illustrated in FIG. 3, the payload restorer 720 restores each layer's BSAC payloads of audio data by de-interleaving the payloads received as one group as described above, and also restores a payload of data for extending a bandwidth of audio data.

The decoder 730 hierarchically decodes audio data included in each layer's payloads restored by the payload restorer 720. Further, the decoder 730 decodes extension data of audio data including at least one of data for extending a channel of audio data restored by the payload restorer 720 to a multi-channel, data for extending a bandwidth of audio data, and data for generating a CRC code for checking a transmission error of audio data. In addition to the aforementioned extension data, extension data of the audio data may be meta data of the audio data or may include a fill element of the audio data.

FIG. 8 is a block diagram of a bit-stream receiving/processing apparatus according to another embodiment of the present invention. The bit-stream receiving/processing apparatus includes a receiver 800, an ES restorer 810, a payload restorer 820, and a decoder 830. According to the configuration illustrated in FIG. 8, a method of truncating a payload can be implemented.

The receiver 800 receives a bit-stream in a specific packet format through an input terminal IN, and thus receives payloads having a part truncated by the coder of FIG. 1 and SL packets including a payload of extension data of audio data. According to the present embodiment, the receiver **800** receives some of the payloads included in one sub frame and some of the payloads included in another sub frame as one group.

The ES restorer 810 parses the SL packets received by the receiver 800 on the SL layer, and thus restores an elementary stream including the payloads having a part truncated by the coder of FIG. 1, and also restores an elementary stream including a payload of extension data of audio data.

The payload restorer 820 restores payloads to the original form by parsing elementary streams restored by the ES restorer 810. That is, the payload restorer 820 restores payloads to the original form by using payloads, wherein some of the payloads of audio data are truncated by the bit-stream processing/transmitting apparatus of FIG. 1, and a payload of extension data is not truncated.

In particular, the payload restorer 820 restores one sub frame including payloads having a truncated part and a payload of extension data from payloads having a truncated audio part included in one elementary stream restored by the ES restorer 810 and a payload of extension data included in another elementary stream.

The decoder 830 hierarchically decodes audio data included in each layer's payloads restored by the payload restorer 820. Further, the decoder 830 decodes extension data of audio data including at least one of data for extending a channel of audio data restored by the payload restorer 820 to a multi-channel, data for extending a bandwidth of audio data, and data for generating a CRC code for checking a transmission error of audio data. In addition to the aforementioned extension data, extension data of the audio data may be meta data of the audio data or may include a fill element of the audio data.

In the exemplary case illustrated in FIG. 3, the payload restorer 820 uses payloads of audio data, wherein some of the payloads are truncated whereas a payload of data for extending a bandwidth of audio data is not truncated, thereby restoring the payloads to the original form. More specifically, the payload restorer 820 restores one sub frame including payloads having a truncated part and a payload of data for extending a bandwidth of audio data from payloads having a truncated audio data part included in one elementary stream and a payload of data for extending a bandwidth of audio data included in another elementary stream.

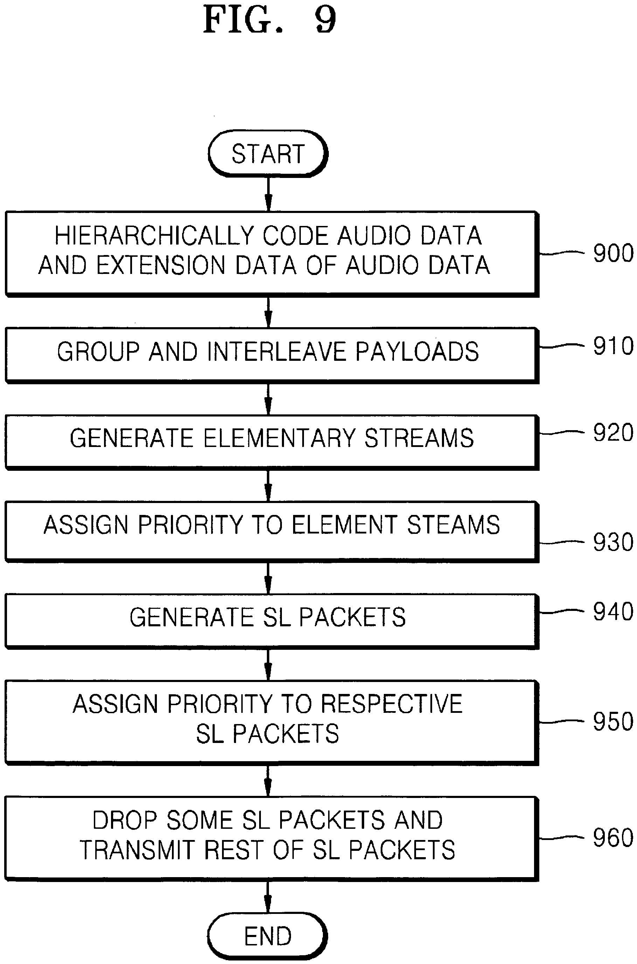

FIG. 9 is a flowchart of a bit-stream processing/transmitting method according to an embodiment of the present invention.

Referring to FIG. 9, the bit-stream processing/transmitting method includes operations sequentially performed in the bit-stream processing/transmitting apparatus of FIG. 1. Thus, although omitted, the above descriptions for the bit-stream processing/ transmitting apparatus of FIG. 1 apply to the bit-stream processing/transmitting method according to the present embodiment.

First, audio data and extension data of the audio data are hierarchically coded (operation 900). In this operation, the audio data may be coded by using the BSAC method. Examples of the extension data of the audio data include data for extending a channel of audio data to a multi-channel, data for extending a bandwidth of audio data, and data for generating a CRC code for checking a transmission error of audio data. In addition to the aforementioned extension data, extension data of the audio data may be meta data of the audio data or may include a fill element of the audio data. When the extension data of the audio data is coded, in operation 900, at least one of the aforementioned examples of the extension data of the audio data may be coded.

Payloads are grouped and interleaved so that some of the payloads included in one sub frame resulting from the coding in operation 900 and some of the payloads included in another sub frame belong to one group (operation 910). Elementary streams corresponding to payload groups on a compression layer are generated from the payloads grouped and interleaved in operation 910 (operation 920).

Priority is assigned to the elementary streams generated in operation 920 (operation 930)

SL packets corresponding to payload groups on a sync layer are generated from the elementary streams generated in operation 930 (operation 940).

Priority is assigned to the respective SL packets generated in operation 940 (operation 950).

According to the priority assigned in operations 930 and 950, some of the SL packets are dropped and the rest of SL packets are transmitted (operation 960).

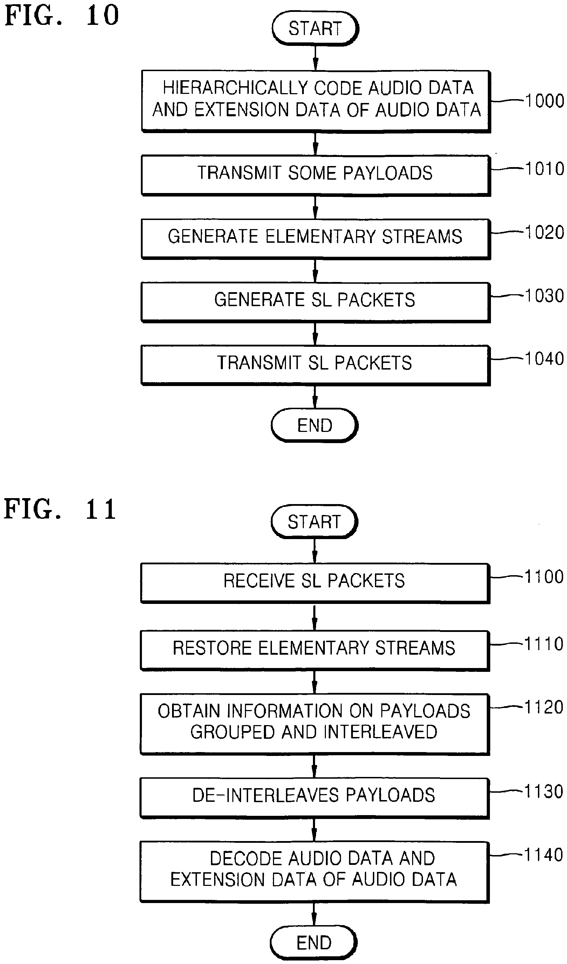

FIG. 10 is a flowchart of a bit-stream processing/transmitting method according to another embodiment of the present invention.

Referring to FIG. 9, the bit-stream processing/transmitting method includes operations sequentially performed in the bit-stream processing/transmitting apparatus of FIG. 5. Thus, although omitted, the above descriptions for the bit-stream processing/ transmitting apparatus of FIG. 5 apply to the bit-stream processing/transmitting method according to the present embodiment.

First, audio data and extension data of the audio data are hierarchically coded (operation 1000). In this operation, the audio data may be coded by using the BSAC method. Examples of the extension data of the audio data include data for extending a channel of audio data to a multi-channel, data for extending a bandwidth of audio data, and data for generating a CRC code for checking a transmission error of audio data. In addition to the aforementioned extension data, extension data of the audio data may be meta data of the audio data or may include a fill element of the audio data. When the extension data of the audio data is coded, in operation 1000, at least one of the aforementioned examples of the extension data of the audio data may be coded.

After operation 1000, some of the payloads included in one sub frame resulting from the coding in operation 1000 are truncated along with some of the payloads included in another sub frame by considering a transmission environment between a coder side and a decoder side, for example, by considering the number of layers that can be determined by a payload from a back-channel (operation 1010).

One elementary stream is generated which corresponds to payload groups on the compression layer from the payloads truncated in operation 1010, and another elementary stream is also generated from a payload of extension data (operation 1020).

SL packets corresponding to payload groups on the SL layer are generated from the elementary streams generated in operation 1020 (operation 1030).

The SL packets generated in operation 1030 are transmitted (operation 1040).

FIG. 11 is a flowchart of a bit-stream receiving/processing method according to another embodiment of the present invention.

Referring to FIG. 11, the bit-stream receiving/processing method includes operations sequentially performed in the bit-stream processing/transmitting apparatus of FIG. 7. Thus, although omitted, the above descriptions for the bit-stream processing/ transmitting apparatus of FIG. 7 apply to the bit-stream processing/transmitting method according to the present embodiment.

First, SL packets including some of the payloads grouped and interleaved by the bit-stream processing/transmitting apparatus of FIGS. 1 and 5 are received (operation 1100).

Elementary streams including some of the payloads grouped and interleaved by the bit-stream processing/transmitting apparatus of FIG. 1 are restored by parsing the SL packets received in operation 1100 (operation 1110).

Information on payloads is obtained in terms of the number of layers, the length, and the order by using header information on payloads included in the elementary streams restored in operation 1110, wherein the header information includes information on the payloads grouped and interleaved by the bit-stream processing/ transmitting apparatus of FIGS. 1 and 5 (operation 1120).

Payloads are restored to the original form by de-interleaving the payloads included in the elementary streams using information obtained in operation 1120 (operation 1130).

Audio data, which is included in each layer's payloads restored in operation 1130, and extension data of the audio data are hierarchically decoded (operation 1140). Further in this operation extension data of the audio data is decoded which includes at least one of data for extending a channel of audio data to a multi-channel, data for extending a bandwidth of audio data, and data for generating a CRC code for checking a transmission error of audio data. In addition to the aforementioned extension data, extension data of the audio data may be meta data of the audio data or may include a fill element of the audio data.

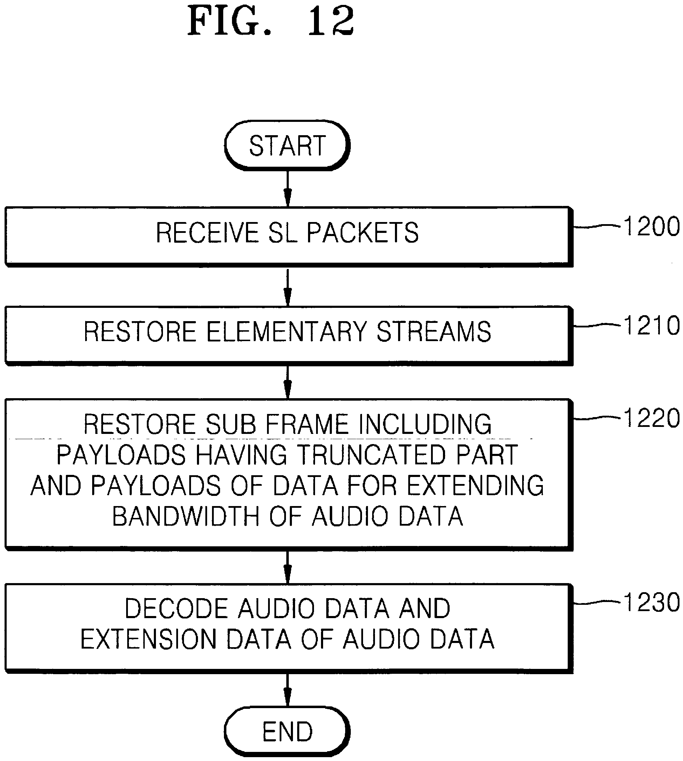

FIG. 12 is a flowchart of a bit-stream receiving/processing method according to another embodiment of the present invention.

Referring to FIG. 12, the bit-stream receiving/processing method includes operations sequentially performed in the bit-stream processing/transmitting apparatus of FIG. 8. Thus, although omitted, the above descriptions for the bit-stream processing/ transmitting apparatus of FIG. 8 apply to the bit-stream processing/transmitting method according to the present embodiment.

First, SL packets including some of the payloads grouped and interleaved by the bit-stream processing/transmitting apparatus of FIGS. 1 and 5 are received (operation 1200).

By parsing SL packets received in operation 1200 on the SL layer, elementary streams are restored which include payloads having a part truncated by the bit-stream processing/transmitting apparatus of FIGS. 1 and 5, and an elementary stream including a payload of extension data of audio data is also restored.

Payloads are restored to the original form by parsing the elementary streams restored in operation 1210 (operation 1220). In particular, in the bit-stream receiving/ processing method of the present embodiment, one sub frame is restored which includes payloads having a truncated part and a payload of data for extending a bandwidth of audio data from payloads having a truncated audio data part included in one elementary stream and a payload of data for extending a bandwidth of audio data included in another elementary stream.

Audio data, which is included in each layer's payloads restored in operation 1220, and extension data of the audio data are hierarchically decoded (operation 1230). Further in this operation extension data of the audio data is decoded which includes at least one of data for extending a channel of audio data to a multi-channel, data for extending a bandwidth of audio data, and data for generating a CRC code for checking a transmission error of audio data. In addition to the aforementioned extension data, extension data of the audio data may be meta data of the audio data or may include a fill element of the audio data.

The embodiments of the present invention can be written as computer programs and can be implemented in general-use digital computers that execute the programs using a computer readable recording medium. The invention can also be embodied as computer readable codes on a computer readable recording medium.

The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet).

While the present invention has been particularly shown and described with reference to exemplary embodiments thereof, it will be understood by those skilled in the art that various changes in form and details may be made therein without departing from the scope of the invention as defined by the appended claims. The exemplary embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. A method of processing/transmitting a bit-stream, the method comprising:
hierarchically coding audio data and one or more extension data of the audio data;
**characterised by**
interleaving payloads of the audio data and the extension data resulting from the coding by grouping the payloads;
assigning priority to respective groups of the payloads grouped and interleaved, and
dropping a group of the payloads grouped and interleaved according to the assigned priority,
and
transmitting the rest of groups of the payloads including payloads of the extension data, wherein
the extension data is at least one selected among data for extending a channel of the audio data to a multi-channel, data for extending a bandwidth of the audio data, and data for checking a transmission error of the audio data.

2. The method of claim 1, wherein, in the interleaving, some of the payloads included in one frame and some of the payloads included in another frame are grouped and interleaved so as to belong to one group.

3. The method of claim 1, wherein the extension data are data for extending a channel of the audio data and wherein: in the interleaving, the payloads are grouped and interleaved so that a base layer of each layer's payloads of the audio data and a base layer of each layer's payloads of data for extending the channel of the audio data belong to one group.

4. The method of claim 1, wherein in the interleaving, the payloads are grouped and interleaved so that a top layer of each layer's payloads of the audio data and a top layer of each layer's payloads of data for extending the channel of the audio data belong to one group.

5. The method of claim 1, wherein: in the interleaving, the payloads are grouped and interleaved so that some of the payloads of audio data included in one frame and some of the payloads of audio data included in another frame belong to one group.

6. The method of claim 1, wherein: in the interleaving, the payloads are grouped and interleaved so that a payload of data for extending a bandwidth of audio data included in one frame and a payload of data for extending a bandwidth of audio data included in another frame belong to one group.

7. The method of claim 1, wherein, in the transmitting, some of the groups are dropped according to the assigned priority.

8. The method of claim 1, further comprising: generating elementary streams from the payloads grouped and interleaved; and generating sync layer packets from the generated elementary streams, wherein, in the transmitting, some of the generated sync layer packets are dropped, and the rest of sync layer packets are transmitted.

9. The method of claim 1, wherein, in the coding, the audio data is coded by using one coding method, and the one or more extension data of the audio data is coded by using one or more coding method.

10. The method of claim 1, wherein, in the interleaving, a group of the payloads is dropped by taking a transmission environment into account.

11. A computer-readable medium having embodied thereon a computer program for executing the method of claim 1.

12. An apparatus for processing/transmitting a bit-stream, the apparatus comprising:
a coder (100) that hierarchically codes audio data and one or more extension data of the audio data;
**characterised by**
a processor (110) that interleaves payloads of the audio data and the extension data resulting from the coding by grouping the payloads;
an elementary stream priority assignment unit (130) for assigning priority to elementary streams generated from respective groups of the payloads grouped and interleaved and
a transmitter (160) that drops a group of the payloads grouped and interleaved according to the assigned priority, and transmits the rest of groups of the payloads including payloads of the extension data, wherein the extension data is at least one selected among data for extending a channel of the audio data to a multi-channel, data for extending a bandwidth of the audio data, and data for checking a transmission error of the audio data.

13. A method of receiving/processing a bit-stream that has been processed and transmitted according to the method of one of claims 1-10, the method comprising:
receiving some payloads grouped and interleaved;
**characterised by**
restoring the payloads grouped and interleaved to original form; and
decoding audio data included in the restored payloads and one or more extension data of the audio data, wherein the extension data is at least one selected among data for extending a channel of the audio data to a multi-channel, data for extending a bandwidth of the audio data,
and data for checking a transmission error of the audio data.

14. The method of claim 13, wherein: in the receiving, some of the payloads included in a first frame and some of the payloads included in a second frame are received as one group; and in the restoring, by de-interleaving the payloads received as one group, the first frame is restored, and the second frame Is restored.

15. The method of claim 13, wherein in the decoding, audio data included in the restored first frame is decoded, and data for extending a channel of the audio data included in the second frame is decoded.

16. The method of claim 13, wherein, in the decoding, audio data included in the restored first frame is decoded, and data for extending a bandwidth of the audio data included in the second frame is decoded.

17. The method of claim 13, wherein: in the receiving, a base layer of each layer payloads of the audio data and a base layer of each layer's payloads of data for extending a channel of the audio data are received as one group; and in the restoring, by de-interleaving the payloads received as one group, each layer's payloads of the audio data are restored, and each layer's payloads of data for extending the channel of the audio data are restored.

18. The method of claim 13, wherein: in the receiving, a top layer of each layer's payloads of the audio data and a top layer of each layer's payloads of data for extending a channel of the audio data are received as one group; and in the restoring, by de-interleaving the payloads received as one group, each layer's payloads of the audio data are restored, and each layer's payloads of data for extending the channel of the audio data are restored.

19. The method of claim 13, wherein: in the receiving, some of the payloads of the audio data included in a first frame and some of the payloads of the audio data included in a second frame are received as one group, and a payload of data for extending a bandwidth of the audio data included in the first frame and a payload of data for extending a bandwidth of the audio data included in the second frame are received as one group; and in the restoring, by de-interleaving the payloads received as one group, each layer's payloads of the audio data are restored, and a payload of data for extending the bandwidth of the audio data.

20. The method of claim 13, the receiving further comprises restoring elementary streams by receiving sync layer packets including some of the payloads grouped and interleaved and parsing the received sync layer packets, wherein, in the restoring, the payloads are restored to the original form by paring the restored elementary streams.

21. The method of claim 13, wherein, in the decoding, the audio data is decoded by using one decoding method, and one or more extension data of the audio data is decoded by using one or more decoding method.

22. The method of claim 13, wherein, in the restoring, the payloads are restored on the basis of information on the payloads grouped and interleaved by a coder side.

23. A computer-readable medium having embodied thereon a computer program for executing the method of claim 13.

24. An apparatus for receiving/processing a bit-stream according to the method of one of claims 13 - 22, the apparatus comprising:
a receiver (700) that receives some payloads grouped and interleaved;
**characterised by**
a restorer (710, 720) that restores the payloads grouped and interleaved to original form; and
a decoder (730) that decodes audio data included in the restored payloads and one or more extension data of the audio data, wherein the extension data is at least one selected among data for extending a channel of the audio data to a multi-channel, data for extending a bandwidth of the audio data, and data for checking a transmission error of the audio data.

## Patentansprüche

1. Verfahren zum Verarbeiten/Senden eines Bit-Stroms, wobei das Verfahren umfasst:
hierarchisches Codieren von Audio-Daten und einem oder mehreren Element/en von Erweiterungs-Daten der Audio-Daten;
**gekennzeichnet durch**
Durchführen von Interleaving von Nutzinformationen der Audio-Daten und der Erweiterungs-Daten, die aus der Codierung resultieren, **durch** Gruppieren der Nutzinformationen;
Zuweisen von Priorität zu jeweiligen Gruppen der gruppierten und Interleaving unterzogenen Nutzinformationen, und
Verwerfen einer Gruppe der gruppierten und Interleaving unterzogenen Nutzinformationen entsprechend der zugewiesenen Priorität, und
Senden der restlichen Gruppen der Nutzinformationen einschließlich Nutzinformationen der Erweiterungs-Daten, wobei die Erweiterungs-Daten wenigstens ein Element sind, das aus Daten zum Erweitern eines Kanals der Audio-Daten auf einen Mehrfachkanal, Daten zum Erweitern einer Bandbreite der Audio-Daten und Daten zum Prüfen eines Sendefehlers der Audio-Daten ausgewählt wird.

2. Verfahren nach Anspruch 1, wobei bei dem Interleaving einige der in einem Rahmen (frame) enthaltenen Nutzinformationen und einige der in einem anderen Rahmen enthaltenen Nutzinformationen so gruppiert und Interleaving unterzogen werden, dass sie zu einer Gruppe gehören.

3. Verfahren nach Anspruch 1, wobei die Erweiterungs-Daten Daten zum Erweitern eines Kanals der Audio-Daten sind und beim Interleaving die Nutzinformationen so gruppiert und Interleaving unterzogen werden, dass eine Basisschicht der Nutzinformationen der Audio-Daten jeder Schicht sowie eine Basis-Schicht der Nutzinformationen von Daten zum Erweitern des Kanals der Audio-Daten jeder Schicht zu einer Gruppe gehören.

4. Verfahren nach Anspruch 1, wobei beim Interleaving die Nutzinformationen so gruppiert und Interleaving unterzogen werden, dass eine oberste Schicht der Nutzinformationen der Audio-Daten jeder Schicht und eine oberste Schicht der Nutzinformationen von Daten zum Erweitern des Kanals der Audio-Daten jeder Schicht zu einer Gruppe gehören.

5. Verfahren nach Anspruch 1, wobei beim Interleaving die Nutzinformationen so gruppiert und Interleaving unterzogen werden, dass einige der Nutzinformationen von Audio-Daten, die in einem Rahmen enthalten sind, und einige der Nutzinformationen von Audio-Daten, die in einem anderen Rahmen enthalten sind, zu einer Gruppe gehören.

6. Verfahren nach Anspruch 1, wobei beim Interleaving die Nutzinformationen so gruppiert und Interleaving unterzogen werden, dass eine Nutzinformation von Daten zum Erweitern einer Bandbreite von Audio-Daten, die in einem Rahmen enthalten ist, und eine Nutzinformation von Daten zum Erweitern einer Bandbreite von Audio-Daten, die in einem anderen Rahmen enthalten ist, zu einer Gruppe gehören.

7. Verfahren nach Anspruch 1, wobei beim Senden einige der Gruppen entsprechend der zugewiesenen Priorität verworfen werden.

8. Verfahren nach Anspruch 1, das des Weiteren Erzeugen von Elementar-Strömen aus den gruppierten und Interleaving unterzogenen Nutzinformationen; sowie Erzeugen von Sync-Schicht-Paketen aus den erzeugten Elementar-Strömen umfasst, wobei beim Senden einige der erzeugten Sync-Schicht-Pakete verworfen werden und der Rest der Sync-Schicht-Pakete gesendet wird.

9. Verfahren nach Anspruch 1, wobei beim Codieren die Audio-Daten unter Verwendung eines Codierverfahrens codiert werden und das eine oder die mehreren Element/e von Erweiterungs-Daten der Audio-Daten unter Verwendung eines Codierverfahrens oder mehrerer Codierverfahren codiert wird/werden.

10. Verfahren nach Anspruch 1, wobei beim Interleaving eine Gruppe der Nutzinformationen verworfen wird, indem eine Sendeumgebung berücksichtigt wird.

11. Computerlesbares Medium, auf dem ein Computerprogramm zum Ausführen des Verfahrens nach Anspruch 1 enthalten ist.

12. Vorrichtung zum Verarbeiten/Senden eines Bit-Stroms, wobei die Vorrichtung umfasst:
eine Codiereinrichtung (100), die Audio-Daten und ein oder mehrere Element/e von Erweiterungsdaten der Audio-Daten hierarchisch codiert;
**gekennzeichnet durch**
eine Verarbeitungseinrichtung (110), die Interleaving von Nutzinformationen der Audio-Daten und der Erweiterungs-Daten, die aus dem Codieren resultieren, **durch** Gruppieren der Nutzinformationen durchführt;
eine Einheit (130) zum Zuweisen von Priorität zu Elementar-Strömen, mit der Elementar-Strömen, die aus jeweiligen Gruppen der gruppierten und Interleaving unterzogenen Nutzinformationen erzeugt werden, Priorität zugewiesen wird, und
eine Sendeeinrichtung (160), die eine Gruppe der gruppierten und Interleaving unterzogenen Nutzinformationen entsprechend der zugewiesenen Priorität verwirft und die restlichen Gruppen der Nutzinformationen einschließlich Nutzinformationen der Enrveiterungs-Daten sendet, wobei die Erweiterungs-Daten wenigstens ein Element sind, das aus Daten zum Erweitern eines Kanals der Audio-Daten auf einen Mehrfachkanal, Daten zum Erweitern einer Bandbreite der Audio-Daten und Daten zum Prüfen eines Sendefehlers der Audio-Daten ausgewählt wird.

13. Verfahren zum Empfangen/Verarbeiten eines Bit-Stroms, der gemäß dem Verfahren nach einem der Ansprüche 1-10 verarbeitet und gesendet worden ist, wobei das Verfahren umfasst:
Empfangen einiger gruppierter und Interleaving unterzogener Nutzinformationen;
**gekennzeichnet durch**
Wiederherstellen der gruppierten und Interleaving unterzogenen Nutzinformationen in ursprünglicher Form; und
Decodieren von Audio-Daten, die in den wiederhergestellten Nutzinformationen enthalten sind, und eines Elementes oder mehrerer Elemente von Erweiterungs-Daten der Audio-Daten, wobei die Erweiterungs-Daten wenigstens ein Element sind, das aus Daten zum Erweitern eines Kanals der Audio-Daten auf einen Mehrfachkanal, Daten zum Erweitern einer Bandbreite der Audio-Daten und Daten zum Prüfen eines Sendefehlers der Audio-Daten ausgewählt wird.

14. Verfahren nach Anspruch 13, wobei beim Empfangen einige der Nutzinformationen, die in einem ersten Rahmen enthalten sind, und einige der Nutzinformationen, die in einem zweiten Rahmen enthalten sind, als eine Gruppe empfangen werden und beim Wiederherstellen durch Deinterleaving der als eine Gruppe empfangenen Nutzinformationen der erste Rahmen wiederhergestellt wird und der zweite Rahmen wiederhergestellt wird.

15. Verfahren nach Anspruch 13, wobei beim Decodieren in dem wiederhergestellten ersten Rahmen enthaltene Audio-Daten decodiert werden und in dem zweiten Rahmen enthaltene Daten zum Erweitern eines Kanals der Audio-Daten decodiert werden.

16. Verfahren nach Anspruch 13, wobei beim Decodieren in dem wiederhergestellten ersten Rahmen enthaltene Audio-Daten decodiert werden und in dem zweiten Rahmen enthaltene Daten zum Erweitern einer Bandbreite der Audio-Daten decodiert werden.

17. Verfahren nach Anspruch 13, wobei beim Empfangen eine Basisschicht der Nutzinformationen der Audio-Daten jeder Schicht und eine Basisschicht der Nutzinformationen von Daten zum Erweitern eines Kanals der Audio-Daten jeder Schicht als eine Gruppe empfangen werden und beim Wiederherstellen durch Deinterleaving der als eine Gruppe empfangenen Nutzinformationen Nutzinformationen der Audio-Daten jeder Schicht wiederhergestellt werden und Nutzinformationen von Daten zum Erweitern des Kanals der Audio-Daten jeder Schicht wiederhergestellt werden.

18. Verfahren nach Anspruch 13, wobei beim Empfangen eine oberste Schicht der Nutzinformationen der Audio-Daten jeder Schicht und eine oberste Schicht von Nutzinformationen von Daten zum Erweitern eines Kanals der Audio-Daten jeder Schicht als eine Gruppe empfangen werden und beim Wiederherstellen durch Deinterleaving der als eine Gruppe empfangenen Nutzinformationen Nutzinformationen der Audio-Daten jeder Schicht wiederhergestellt werden und Nutzinformationen von Daten zum Erweitern des Kanals der Audio-Daten jeder Schicht wiederhergestellt werden.

19. Verfahren nach Anspruch 13, wobei beim Empfangen einige der Nutzinformationen der Audio-Daten, die in einem ersten Rahmen enthalten sind, und einige der Nutzinformationen der Audio-Daten, die in einem zweiten Rahmen enthalten sind, als eine Gruppe empfangen werden und eine Nutzinformation von Daten zum Erweitern einer Bandbreite der Audio-Daten, die in dem ersten Rahmen enthalten ist, sowie eine Nutzinformation von Daten zum Erweitern einer Bandbreite der Audio-Daten, in dem zweiten Rahmen enthalten ist, als eine Gruppe empfangen werden und beim Wiederherstellen durch Deinterleaving der als eine Gruppe empfangenen Nutzinformationen Nutzinformationen der Audio-Daten jeder Schicht wiederhergestellt werden und eine Nutzinformation von Daten zum Erweitern der Bandbreite der Audio-Daten wiederhergestellt wird.

20. Verfahren nach Anspruch 13, wobei das Empfangen des Weiteren das Wiederherstellen von Elementar-Strömen durch Empfangen von Sync-Schicht-Paketen, die einige der gruppierten und Interleaving unterzogenen Nutzinformationen enthalten, sowie Parsing der empfangenen Sync-Schicht-Pakete umfasst und beim Wiederherstellen die Nutzinformationen durch Parsing der wiederhergestellten Elementar-Ströme in der ursprünglichen Form wiederhergestellt werden.

21. Verfahren nach Anspruch 13, wobei beim Decodieren die Audio-Daten unter Verwendung eines Decodierverfahrens decodiert werden und ein oder mehrere Element/e von Erweiterungs-Daten der Audio-Daten unter Verwendung eines Decodierverfahrens oder mehrerer Decodierverfahren decodiert wird/werden.

22. Verfahren nach Anspruch 13, wobei beim Wiederherstellen die Nutzinformationen auf Basis von Informationen über die von einer Seite der Codiereinrichtung gruppierten und Interleaving unterzogenen Nutzinformation wiederhergestellt werden.

23. Computerlesbares Medium, auf dem ein Computerprogramm zum Ausführen des Verfahrens nach Anspruch 13 enthalten ist.

24. Vorrichtung zum Empfangen/Verarbeiten eines Bit-Stroms gemäß dem Verfahren nach einem der Ansprüche 13 - 22, wobei die Vorrichtung umfasst:
eine Empfangseinrichtung (700), die einige gruppierte und Interleaving unterzogene Nutzinformationen empfängt;
**gekennzeichnet durch**
eine Wiederherstellungseinrichtung (710, 720), die die gruppierten und Interleaving unterzogenen Nutzinformationen in ursprünglicher Form wiederherstellt; und
eine Decodiereinrichtung (730), die in den wiederhergestellten Nutzinformationen enthaltene Audio-Daten und ein oder mehrere Element/e von Erweiterungs-Daten der Audio-Daten decodiert, wobei die Erweiterungs-Daten wenigstens ein Element sind, das aus Daten zum Erweitern eines Kanals der Audio-Daten auf einen Mehrfachkanal, Daten zum Erweitern einer Bandbreite der Audio-Daten und Daten zum Prüfen eines Sendefehlers der Audio-Daten ausgewählt wird.

## Revendications

1. Procédé de traitement/transmission d'un flux binaire, le procédé comprenant :
le codage hiérarchique de données audio et d'une ou plusieurs données d'extension des données audio ;
**caractérisé par**
l'entrelacement de charges utiles des données audio et des données d'extension résultant du codage en groupant les charges utiles ;
l'attribution de priorités à des groupes respectifs des charges utiles groupées et entrelacées, et
l'élimination d'un groupe des charges utiles groupées et entrelacées en fonction de la priorité attribuée, et
la transmission du reste des groupes de charges utiles, y compris des charges utiles des données d'extension, dans lequel les données d'extension correspondent à au moins un des types de données sélectionnés parmi des données pour étendre un canal des données audio en un multi-canal, des données pour étendre une bande passante des données audio, et des données pour vérifier une erreur de transmission des données audio.

2. Procédé selon la revendication 1, dans lequel, lors de l'entrelacement, certaines des charges utiles comprises dans une trame et certaines des charges utiles comprises dans une autre trame sont groupées et entrelacées de manière à appartenir à un même groupe.

3. Procédé selon la revendication 1, dans lequel les données d'extension sont des données pour étendre un canal des données audio, et dans lequel : lors de l'entrelacement, les charges utiles sont groupées et entrelacées de telle sorte qu'une couche de base des charges utiles des données audio de chaque couche et une couche de base des charges utiles de données de chaque couche pour étendre le canal des données audio appartiennent à un même groupe.

4. Procédé selon la revendication 1, dans lequel : lors de l'entrelacement, les charges utiles sont groupées et entrelacées de telle sorte qu'une couche supérieure des charges utiles des données audio de chaque couche et une couche supérieure des charges utiles de données de chaque couche pour étendre le canal des données audio appartiennent à un même groupe.

5. Procédé selon la revendication 1, dans lequel : lors de l'entrelacement, les charges utiles sont groupées et entrelacées de telle sorte que certaines des charges utiles de données audio comprises dans une trame et certaines des charges utiles de données audio comprises dans une autre trame appartiennent à un même groupe.

6. Procédé selon la revendication 1, dans lequel : lors de l'entrelacement, les charges utiles sont groupées et entrelacées de telle sorte qu'une charge utile de données pour étendre une bande passante de données audio comprises dans une trame et une charge utile de données pour étendre une bande passante de données audio comprises dans une autre trame appartiennent à un même groupe.

7. Procédé selon la revendication 1, dans lequel, lors de la transmission, certains des groupes sont éliminés en fonction de la priorité attribuée.

8. Procédé selon la revendication 1, comprenant en outre : la génération de flux élémentaires à partir des charges utiles groupées et entrelacées ; et la génération de paquets de couche de synchronisation à partir des flux élémentaires générés, dans lequel, lors de la transmission, certains des paquets de couche de synchronisation générés sont éliminés, et les autres paquets de couche de synchronisation sont transmis.

9. Procédé selon la revendication 1, dans lequel, lors du codage, les données audio sont codées à l'aide d'un procédé de codage, et la ou les données d'extension des données audio sont codées à l'aide d'un ou plusieurs procédés de codage.

10. Procédé selon la revendication 1, dans lequel, lors de l'entrelacement, un groupe de charges utiles est éliminé en prenant en compte un environnement de transmission.

11. Support lisible par un ordinateur sur lequel est physiquement présent un programme informatique pour mettre en oeuvre le procédé selon la revendication 1.

12. Appareil pour traiter/transmettre un flux binaire, l'appareil comprenant :
un encodeur (100) qui code hiérarchiquement des données audio et une ou plusieurs données d'extension des données audio ;
**caractérisé par**
un processeur (110) qui entrelace des charges utiles des données audio et les données d'extension résultant du codage par groupement des charges utiles ;
une unité d'attribution de priorité de flux élémentaire (130) pour attribuer une priorité à des flux élémentaires générés à partir de groupes respectifs des charges utiles groupées et entrelacées et
un transmetteur (160) qui élimine un groupe des charges utiles groupées et entrelacées en fonction de la priorité attribuée, et transmet le reste des groupes des charges utiles, y compris des charges utiles des données d'extension, dans lequel les données d'extension correspondent à au moins un des types de données sélectionnés parmi des données pour étendre un canal des données audio en un multi-canal, des données pour étendre une bande passante des données audio, et des données pour vérifier une erreur de transmission des données audio.

13. Procédé de réception/traitement d'un flux binaire qui a été traité et transmis conformément à un procédé selon l'une des revendications 1 à 10, le procédé comprenant :
la réception de certaines charges utiles groupées et entrelacées ;
**caractérisé par**
la restauration des charges utiles groupées et entrelacées à leur forme originale ; et
le décodage de données audio comprises dans les charges utiles restaurées et d'une ou plusieurs données d'extension des données audio, dans lequel les données d'extension correspondent à au moins un des types de données sélectionnés parmi des données pour étendre un canal des données audio en un multi-canal, des données pour étendre une bande passante des données audio, et des données pour vérifier une erreur de transmission des données audio.

14. Procédé selon la revendication 13, dans lequel : lors de la réception, certaines des charges utiles comprises dans une première trame et certaines des charges utiles comprises dans une deuxième trame sont reçues comme un même groupe ; et lors de la restauration, en désentrelaçant les charges utiles reçues comme un même groupe, la première trame est restaurée et la deuxième trame est restaurée.

15. Procédé selon la revendication 13, dans lequel, lors du décodage, des données audio comprises dans la première trame restaurée sont décodées et des données pour étendre un canal des données audio comprises dans la deuxième trame sont décodées.

16. Procédé selon la revendication 13, dans lequel, lors du décodage, des données audio comprises dans la première trame restaurée sont décodées et des données pour étendre une bande passante des données audio comprises dans la deuxième trame sont décodées.

17. Procédé selon la revendication 13, dans lequel : lors de la réception, une couche de base des charges utiles des données audio de chaque couche et une couche de base des charges utiles de données de chaque couche pour étendre un canal des données audio sont reçues comme un même groupe ; et lors de la restauration, en désentrelaçant les charges utiles reçues comme un même groupe, les charges utiles des données audio de chaque couche sont restaurées, et les charges utiles de données de chaque couche pour étendre le canal des données audio sont restaurées.

18. Procédé selon la revendication 13, dans lequel : lors de la réception, une couche supérieure des charges utiles des données audio de chaque couche et une couche supérieure des charges utiles de données de chaque couche pour étendre un canal des données audio sont reçues comme un même groupe ; et lors de la restauration, par désentrelacement des charges utiles reçues comme un même groupe, les charges utiles des données audio de chaque couche sont restaurées, et les charges utiles de données de chaque couche pour étendre le canal des données audio sont restaurées.

19. Procédé selon la revendication 13, dans lequel : lors de la réception, certaines des charges utiles des données audio comprises dans une première trame et certaines des charges utiles des données audio comprises dans une deuxième trame sont reçues comme un même groupe, et une charge utile de données pour étendre une bande passante des données audio comprises dans la première trame et une charge utile de données pour étendre une bande passante des données audio comprises dans la deuxième trame sont reçues comme un même groupe ; et lors de la restauration, par désentrelacement des charges utiles reçues comme un même groupe, les charges utiles des données audio de chaque couche sont restaurées, ainsi qu'une charge utile de données pour étendre la bande passante des données audio est restaurée.

20. Procédé selon la revendication 13, dans lequel la réception comprend en outre la restauration de flux élémentaires en recevant des paquets de couche de synchronisation comprenant certaines des charges utiles groupées et entrelacées et en décomposant analytiquement les paquets de couche de synchronisation reçus, dans lequel, lors de la restauration, les charges utiles sont restaurées à leur forme originale en associant les flux élémentaires restaurés.

21. Procédé selon la revendication 13, dans lequel, lors du décodage, les données audio sont décodées à l'aide d'un procédé de décodage, et une ou plusieurs données d'extension des données audio sont décodées à l'aide d'un ou plusieurs procédés de décodage.

22. Procédé selon la revendication 13, dans lequel, lors de la restauration, les charges utiles sont restaurées en fonction d'information concernant les charges utiles groupées et entrelacées par un côté encodeur.

23. Support lisible par un ordinateur sur lequel est physiquement présent un programme informatique pour mettre en oeuvre le procédé selon la revendication 13.

24. Appareil de réception/traitement d'un flux binaire selon le procédé d'une des revendications 13 à 22, l'appareil comprenant :
un récepteur (700) qui reçoit certaines charges utiles groupées et entrelacées ;
**caractérisé par**
un restaurateur (710, 720) qui restaure les charges utiles groupées et entrelacées à leur forme originale ; et
un décodeur (730) qui décode des données audio comprises dans les charges utiles restaurées et une ou plusieurs données d'extension des données audio, dans lequel les données d'extension correspondent à au moins un des types de données sélectionnés parmi des données pour étendre un canal des données audio en un multi-canal, des données pour étendre une bande passante des données audio, et des données pour vérifier une erreur de transmission des données audio.
